# EUROPEAN PATENT SPECIFICATION

(11) **EP 1 027 806 B1**
(45) Date of publication and mention of the grant of the patent: **23.11.2005**
(21) Application number: 98925695.3
(22) Date of filing: 18.06.1998
(51) Int. Cl.: H04Q 1/00

(54) **PROCEDURE FOR SETTING UP A SECURE SERVICE CONNECTION IN A TELECOMMUNICATION SYSTEM**
VERFAHREN ZUM AUFBAUEN EINER GESCHÜTZTEN DIENSTVERBINDUNG IN EINEM TELEKOMMUNIKATIONSSYSTEM
PROCEDURE D'ETABLISSEMENT D'UNE CONNEXION SECURISEE A DES SERVICES DANS UN SYSTEME DE TELECOMMUNICATIONS

(30) Priority: 30.06.1997 FI 972819
(43) Date of publication of application: 16.08.2000
(73) Proprietor: TeliaSonera Finland Oyj, 00510 Helsinki (FI)
(72) Inventor: VATANEN, Harri, FIN-00660 Helsinki (FI)
(74) Representative: Simmelvuo, Markku Kalevi
(86) International application number: PCT/FI1998/000532
(87) International publication number: WO 1999/001990

(56) References cited:
- WO-A1-94/11849
- WO-A1-97/01920
- WO-A1-97/03410
- CA-A1- 2 161 983
- US-A- 4 706 275

## Description

The present invention relates to a procedure as defined in the preamble of claim 1 for setting up of a secure service connection in a telecommunication system, which may comprise e.g. the Internet and a telephone network or mobile communication network.

The global data network, the Internet, is based on an open structure which practically anyone can join. In the network, each device included in the network has an individual name, an Internet name. The data link protocol used for communication over the Internet is TCP/IP (Transmission Control Protocol/Internet Protocol), in which TCP corresponds to OSI layer 4 and IP to layer 3. OSI (Open System Interconnection Architecture) is a standard defining how systems can be openly interconnected. In the OSI model, telecommunication software is divided into sections called layers. The principle is that the functions of the layer have been defined but the manner of implementation has been left open. For each layer, a specific interface has been defined, through which it communicates with the layers above and below it. The functions of a layer and those of the layers below it are called services.

A common problem restricting the use of the Internet is that the security of certain network layers consistent with the OSI model has not been standardised or otherwise defined. Therefore, a connection set up via the Internet between two computers or equivalent terminals is unprotected, which means that in principle anyone who is connected to the network can receive messages sent between the two computers and read them. Correspondingly, anyone can send messages intended for someone else via a connection between two computers and thus disturb or otherwise impair the security and privacy of users. For example, placing orders and making payments for services sold via the Internet is difficult. Likewise, reliable user identification and connection setup are difficult and call for special arrangements.

In wired telephone networks and in mobile communication networks, advanced methods for encrypting a telecommunication connection or at least the data transmitted over the connection are used. Especially in a mobile communication network such as the GSM network, the encryption of radio communication can be regarded as providing a very high level of security. Moreover, the GSM network standard allows the transmission of SMS or ESMS messages, so the information to be encrypted can be enciphered into the message at the transmitting end and deciphered at the receiving end. Such an arrangement can be regarded as providing a very high level of data security.

Patent specification WO 94/11849 presents a mobile communication system in which the user of the system is authenticated locally, whereupon a secure connection is set up to a service provider or a telecommunication server. Before establishing a connection from terminal equipment to a service provider the user is authenticated locally by using an identity code, e.g. a PIN code. When the user is locally authenticated a connection is established from a mobile exchange to the service provider. However, a problem in selling services and offering them via a telephone network or mobile communication network is that the service provider has no way e.g. to graphically present the services or products in question. In addition, using or ordering services via a terminal in a telephone network or mobile communication network, i.e. via a telephone, is difficult.

Reference publication CA 2161983 relates to transmitting of confidential information between two Internet applications. Upon establishing a connection with a browser, the server passes a phone number to the browser. When the client wants to send confidential information to the server, the browser program captures and stores the information locally. The browser program further saves all information required to restore the current network session and disconnects from it. The browser calls the server or another payment processing system over the telephone network and transmits the confidential information. The server processes the confidential information and disconnects. Then the browser uses the saved status information to restore the original network session.

Reference publication WO 9701920 relates to a method for charging a user of a computer system of the chargeable services used by him e.g. via a telephone bill. According to the solution when a user wants to establish a connection a chargeable service, he/she calls to a predetermined telephone number. As long as the telephone connection exists the user has a right to use the chargeable service.

A further problem is that prior art solutions do not provide a solution that allows reliable user identification prior to ordering or using services offered by the network.

Yet a further problem of the prior art solutions is that they do not provide a solution in which a user can use or order products or services provided via the Internet regardless of his/her location and terminal device or computer connected to the Internet.

The object of the present invention is to eliminate the problems referred to above.

A specific object of the present invention is to disclose a new type of procedure in a telecommunication system comprising both a telephone network and a data network, which procedure allows reliable user identification and provides a handy and easy way for the user to order services offered by the network.

A further object of the present invention is to disclose a procedure in which the user can use or order products or services provided via the Internet regardless of his/her location and terminal device or computer connected to the Internet.

As for the features characteristic of the present invention, reference is made to the claims.

In the procedure of the invention for setting up a secure service connection in a telecommunication system comprising a first telecommunication network, preferably a data network or the Internet, a first terminal device, preferably a computer or equivalent, connected to the first telecommunication network, a second telecommunication network, preferably a telephone network and/or mobile communication network, and a second terminal device, preferably a telephone or mobile station, connected to the second telecommunication network, and a telecommunication server communicating with both the first and the second telecommunication networks, the first terminal device is connected via a first telecommunication connection to the telecommunication server and the second terminal device is connected via a second telecommunication connection to the telecommunication server.

According to the invention, the second terminal device transmits the unique address of the first terminal device and information authorizing the use of services and/or ordering of services to the telecommunication server. The data sent by the second terminal device is verified in the telecommunication server and the first telecommunication connection from the telecommunication server to the first terminal device is set up based on the verification and the address data received if the first terminal device has the required right of access to use and/or order the services of the telecommunication server.

The access right may also comprise a given sum of money used to buy service time at the telecommunication server or the access right may consist of a command to open a connection, in which case the command to close the connection is sent in a corresponding manner via the telephone or mobile station. The unique address may be the IP address or domain name of the computer.

As compared with prior art, the present invention has the advantage that it makes it easy to verify the Internet user's right of access to services offered in the network and to pay for the services and products sold via the Internet. A further advantage of the invention as compared with prior art is that the user is not tied to a given computer or other corresponding data network terminal because the IP address from which the user is accessing the network is specified each time a connection is set up.

In an embodiment of the present invention, the second telecommunication connection to be established via a telephone network is set up as a secure connection in which all data transmitted via the connection is encrypted using a predetermined encrypting algorithm. Correspondingly, the data transmitted is decrypted in the telecommunication server and the data to be transmitted to the telephone is encrypted. On the other hand, the second telecommunication connection may also be a message switching connection, preferably an ESMS connection, in which case the connection is used to transmit encrypted message packets containing the above-mentioned address data and access right verification data.

In an embodiment of the invention, a check is carried out in the telecommunication server to establish whether the first and/or the second telecommunication connection is active and whether the user has a right of access to the services provided via the telecommunication server. In this case, the payments for the service and connection may be charged on the basis of duration of connection.

In an embodiment of the invention, a fixed payment for the service is sent by telephone to the telecommunication server using e.g. known chargeable service number applications and the first telecommunication connection is disconnected on expiration of the service time corresponding to the payment.

In an embodiment, both connections are used in real time to buy a product or service via the Internet by sending a purchase order via the first telecommunication connection and the computer and reserving the purchase price on the user's account via the second telecommunication connection and the telephone. Next, the telecommunication server is informed of the reservation of the purchase price, and when the user receives the product or service and accepts it, the transaction is acknowledged by telephone, whereupon the reserved sum is transferred to the seller.

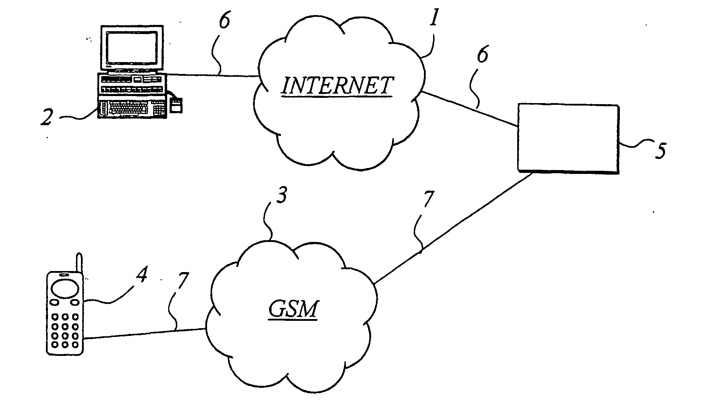

In the following, the invention will be described by the aid of a few preferred embodiments by referring to the attached drawing, which presents a telecommunication system according to the invention.

The drawing presents an example of a telecommunication system in which the procedure of the invention can be implemented. The telecommunication system shown in the drawing comprises the Internet 1 and a GSM telephone network 3. Moreover, a computer 2 is connected to the Internet and a mobile station 4 is connected to the GSM network. The service provider's telecommunication server 5 is connected both to the Internet and to the GSM network, and the computer 2 is connected via telecommunication connection 6 over the Internet to the telecommunication server while the mobile station is connected to the telecommunication server via telecommunication connection 7 over the GSM network.

It is to be noted that the networks and terminal devices presented here are only examples and that other devices and networks applicable can also be used in the procedure of the invention.

The basic idea of the procedure of the invention is that an open network, such as the Internet 1, is used as a marketing and service channel in which products and services are presented, and the payments for desired products and services are made using a telephone via a separate telecommunication connection 7.

The Internet user, for whom a unique IP address has been defined, sets up a connection to the telecommunication server 5 from his/her computer after he/she has either sent from the mobile station 4 a payment message, e.g. an ESMS message containing his/her user identifier encrypted in the data field in a manner known in itself, or set up an encrypted circuit-switched connection 7 to the telecommunication server 5 and sent his/her user identifier via this connection. In the telecommunication server 5, the message received is decrypted and the first telecommunication connection 6 is related to the user's account or other record associated with the user. At intervals, the telecommunication server 5 checks whether the telecommunication connections 6, 7 are active and maintains call duration counters based on these checks.

In an example, the payments for the chargeable services offered via the Internet are charged as follows. Using a service-specific counter in the telecommunication server, in which case the customer is charged e.g. on the basis of duration of connection, the customer sends a fixed sum, which is stored in the counter. When the first telecommunication connection 6 in the open network is set up, the counter is started, and when the counter detects that the stored fixed sum has been exhausted, the first telecommunication connection 6 is disconnected. After this, the customer is billed by this fixed sum. In another example, the connection time is paid for via continuous time charging, in which case the server has a service-specific counter which increases the sum to be charged until the user sends the server 5 a request to disconnect the telecommunication connection 6. After this, the customer is billed by the sum indicated by the counter. A request to cancel the service is sent via the second telecommunication connection 7.

In a third alternative, the product or service is presented to the customer via the first telecommunication connection 6, and after the customer has decided to buy, he/she uses the second telecommunication connection 7 to pay for the product or service. Based on the payment, the product or service is delivered to the customer. In a fourth example, the product or service is paid via a mobile station. Using a mobile telephone 4 and a second telecommunication connection 7 in any one of the ways described above, the customer reserves a given sum on his/her account, and the service provider is notified of the reserved sum via the telecommunication server. Based on this notification, the service provider can deliver the product or service to the customer and the customer acknowledges receipt of the product after accepting the delivery. It is to be noted that in all the above examples the state of the payment can be displayed for the customer in real time using the first telecommunication connection 6 and the computer 2.

The invention is not restricted to the examples of its embodiments described above, but many variations are possible within the scope of the inventive idea defined by the claims.

## Claims

1. Procedure for setting up a secure service connection in a telecommunication system comprising a first telecommunication network (1), a first terminal device (2) connected to the first telecommunication network, a second telecommunication network (3), a second terminal device (4) connected to the second telecommunication network, and a telecommunication server (5), in which procedure the first terminal device is connected via a first telecommunication connection (6) to the telecommunication server (5) and the second terminal device (4) is connected to the telecommunication server (5) via a second telecommunication connection (7), **characterised in that**
setting up a secure telecommunication connection (7) between the second terminal device and the telecommunication server (5) by encrypting the data transmitted via the connection using a predetermined encrypting algorithm, said second telecommunication connection (7) further set up as a message switching connection used to transmit encrypted message packets;
transmitting via the second terminal device (4) the unique address of the first terminal device (2) and information authorizing the use of services and/or ordering of services to the telecommunication server (5);
verifying the data sent by the second terminal device (4) in the telecommunication server (5); and
setting up the first telecommunication connection (6) from the telecommunication server to the first terminal device (2) based on the verification and the address data received if the first terminal device (2) has the required right of access to use and/or order the services of the telecommunication server (5).

2. Procedure as defined in claim 1, **characterised in that** the message switching connection is used to transmit SMS and/or ESMS messages according to the GSM standard.

3. Procedure as defined in claim 1 or 2, **characterised in that** a check is carried out in the telecommunication server (5) to establish whether the first and/or the second telecommunication connection (6, 7) is active and whether the user has a right of access to the services provided via the telecommunication server (5).

4. Procedure as defined in any one of claims 1 - 3, **characterised in that**, in the telecommunication server (5), the duration of the first telecommunication connection (6) between the first terminal device and the service is measured and the user of the second terminal device (2) is charged on the basis of the duration.

5. Procedure as defined in any one of claims 1 - 4, **characterised in that** a fixed payment for the service is sent via the second telecommunication connection (7), on the basis of which the telecommunication server (5) disconnects the first telecommunication connection (6) on expiration of the service time corresponding to the payment.

6. Procedure as defined in any one of claims 1 - 5, **characterised in that**
a purchase order is transmitted via the first telecommunication connection (6);
the purchase price is reserved on the user's account via the second telecommunication connection;
the telecommunication server (5) is informed of the reservation; and
the transaction is acknowledged via the second telecommunication connection (7) by the customer.

7. Procedure as defined in any one of claims 1 - 6, **characterised in that** the first telecommunication network (1) is a data network and the first terminal device (2) comprises means for connecting the terminal device to the data network.

8. Procedure as defined in any one of claims 1 - 7, **characterised in that** the second telecommunication network (3) is a telephone network and/or mobile communication network and the second terminal device (4) is compatible with the telecommunication network and/or mobile communication network.

## Patentansprüche

1. Verfahren zum Erstellen einer geschützten Service- bzw. Dienstverbindung in einem Telekommunikationssystem, welches aufweist: ein erstes Telekommunikationsnetzwerk (1), eine erste Endgeräteeinrichtung (2), welche mit dem ersten Telekommunikationsnetzwerk verbunden ist, ein zweites Telekommunikationsnetzwerk (3), eine zweite Endgeräteeinrichtung (4), welche mit dem zweiten Telekommunikationsnetzwerk verbunden ist, und einen Telekommunikationsserver (5), wobei bei dem Verfahren die erste Endgeräteeinrichtung über eine erste Telekommunikationsverbindung (6) mit dem Telekommunikationsserver (5) verbunden ist und die zweite Endgeräteeinrichtung (4) über eine zweite Telekommunikationsverbindung (7) mit dem Telekommunikationsserver (5) verbunden ist, **gekennzeichnet durch**
Erstellen einer geschützten Telekommunikationsverbindung (7) zwischen der zweiten Endgeräteeinrichtung und dem Telekommunikationsserver (5) **durch** Verschlüsseln der Daten, welche über die Verbindung **durch** Nutzen eines vorher festgelegten Verschlüsselungsalgorithmus übertragen werden, wobei die zweite Telekommunikationsverbindung (7), welche ferner als eine Nachrichtenvermittlungsverbindung erstellt ist, benutzt wird, um die verschlüsselten Nachrichtenpakete zu übertragen;
Übertragen der einzigartigen Adresse der ersten Endgeräteeinrichtung (2) und der Information, welche das Gebrauchen der Dienste und/oder das Bestellen der Dienste autorisiert, über die zweite Endgeräteeinrichtung (4) an den Telekommunikationsserver (5);
Verifizieren der gesendeten Daten **durch** die zweite Endgeräteeinrichtung (4) in dem Telekommunikationsserver (5); und
Erstellen der ersten Telekommunikationsverbindung (6) von dem Telekommunikationsserver mit der ersten Endgeräteeinrichtung (2), basierend auf der Verifizierung und den empfangenen Adressdaten, wenn die erste Endgeräteeinrichtung (2) das angeforderte Recht auf Zugriff besitzt, um die Dienste des Telekommunikationsservers (5) zu nutzen und/oder zu bestellen.

2. Verfahren nach Anspruch 1, **dadurch gekennzeichnet, dass** die Nachrichtenvermittlungsverbindung benutzt wird, um SMS- und/oder ESMS-Nachrichten entsprechend dem GSM-Standard zu übertragen.

3. Verfahren nach Anspruch 1 oder 2, **dadurch gekennzeichnet, dass** eine Überprüfung in dem Telekommunikationsserver (5) ausgeführt wird, um festzustellen, ob die erste und/oder die zweite Telekommunikationsverbindung (6, 7) aktiv ist und ob der Nutzer ein Zugriffsrecht auf die Dienste hat, welche über den Telekommunikationsserver (5) zur Verfügung gestellt werden.

4. Verfahren nach einem der Ansprüche 1-3, **dadurch gekennzeichnet, dass** in dem Telekommunikationsserver (5) die Dauer der ersten Telekommunikationsverbindung (6) zwischen der ersten Endgeräteeinrichtung und dem Dienst gemessen wird und der Nutzer der zweiten Endgeräteeinrichtung (2) aufgrund der Dauer belastet wird.

5. Verfahren nach einem der Ansprüche 1-4, **dadurch gekennzeichnet, dass** eine festgelegte Bezahlung für den Dienst über die zweite Telekommunikationsverbindung (7) gesendet wird, auf deren Grundlage der Telekommunikationsserver (5) die erste Telekommunikationsverbindung (6) nach Ablauf der Service- bzw. Dienstzeit, die der Bezahlung entspricht, unterbricht.

6. Verfahren nach einem der Ansprüche 1-5, **dadurch gekennzeichnet, dass**
ein Kaufauftrag über die erste Telekommunikationsverbindung (6) übertragen wird;
der Kaufpreis auf dem Konto des Nutzers über die zweite Telekommunikationsverbindung reserviert wird;
der Telekommunikationsserver (5) über die Reservierung informiert wird; und
die Transaktion bzw. Durchführung des Geschäftes durch die zweite Telekommunikationsverbindung (7) durch den Kunden bestätigt wird.

7. Verfahren nach einem der Ansprüche 1-6, **dadurch gekennzeichnet, dass** das erste Telekommunikationsnetzwerk (1) ein Datennetzwerk ist und die erste Endgeräteeinrichtung (2) eine Vorrichtung zum Verbinden der Endgeräteeinrichtung mit dem Datennetzwerk aufweist.

8. Verfahren nach einem der Ansprüche 1-7, **dadurch gekennzeichnet, dass** das zweite Telekommunikationsnetzwerk (3) ein Telefonnetzwerk und/oder ein Mobilkommunikationsnetzwerk ist und dass die zweite Endgeräteeinrichtung (4) mit dem Telekommunikationsnetzwerk und/oder dem Mobilkommunikationsnetzwerk kompatibel ist.

## Revendications

1. Procédure permettant l'établissement d'une connexion sécurisée dans un système de télécommunications comprenant un premier réseau de télécommunications (1), un premier équipement terminal (2) connecté au premier réseau de télécommunications, un second réseau de télécommunications (3), un second équipement terminal (4) connecté au second réseau de télécommunications, ainsi qu'un serveur de télécommunications (5), dans laquelle procédure, le premier équipement terminal est connecté par l'intermédiaire d'une première connexion de télécommunications (6) au serveur de télécommunications (5) et le second équipement terminal (4) est connecté au serveur de télécommunications (5) par l'intermédiaire d'une seconde connexion de télécommunications (7), **caractérisée par** :
l'établissement d'une connexion de télécommunications sécurisée (7) entre le second équipement terminal et le serveur de télécommunications (5) au moyen du chiffrement des données transmises par l'intermédiaire de la connexion utilisant un algorithme de chiffrement prédéterminé, ladite seconde connexion de télécommunications (7) étant en outre établie en tant que connexion de commutation de messages utilisée pour transmettre des paquets de messages chiffrés ;
la transmission par l'intermédiaire du second équipement terminal (4) de l'adresse unique du premier équipement terminal (2) et des informations autorisant l'utilisation de services et/ou commandant des services au serveur de télécommunications (5) ;
la vérification des données envoyées par le second équipement terminal (4) dans le serveur de télécommunications (5) ; et
l'établissement de la première connexion de télécommunications (6) à partir du serveur de télécommunications vers le premier équipement terminal (2) sur la base de la vérification et des données d'adressage reçues dans le cas où le premier équipement terminal (2) possède le droit d'accès nécessaire pour utiliser et/ou commander les services du serveur de télécommunications (5).

2. Procédure selon la revendication 1, **caractérisée en ce que** la connexion à commutation de messages est utilisée pour transmettre des minimessages SMS et/ou ESMS conformément au standard GSM.

3. Procédure selon la revendication 1 ou 2, **caractérisée en ce qu'**un contrôle est exécuté dans le serveur de télécommunications (5) pour établir si la première et/ou la seconde connexion de télécommunications (6, 7) est active et si l'utilisateur possède un droit d'accès aux services fournis par l'intermédiaire du serveur de télécommunications (5).

4. Procédure telle que définie dans l'une quelconque des revendications 1 à 3, **caractérisée en ce que**, dans le serveur de télécommunications (5), la durée de la première connexion de télécommunications (6) entre le premier équipement terminal et le service est mesurée et l'utilisateur du second équipement terminal (2) est facturé sur la base de la durée.

5. Procédure telle que définie dans l'une quelconque des revendications 1 à 4, **caractérisée en ce qu'**un coût fixe correspondant au service est envoyé par l'intermédiaire de la seconde connexion de télécommunications (7), sur la base duquel le serveur de télécommunications (5) déconnecte la première connexion de télécommunications (6) à l'expiration de la durée de service correspondant au paiement.

6. Procédure telle que définie dans l'une quelconque des revendications 1 à 5, **caractérisée en ce que** :
un ordre d'achat est transmis par l'intermédiaire de la première connexion de télécommunications (6) ;
le prix d'achat est affecté au compte de l'utilisateur par l'intermédiaire de la seconde connexion de télécommunications ;
le serveur de télécommunications (5) est informé de l'affectation sur le compte ; et
la transaction est acquittée par l'intermédiaire de la seconde connexion de télécommunications (7) par le client.

7. Procédure selon l'une quelconque des revendications 1 à 6, **caractérisée en ce que** le premier réseau de télécommunications (1) est un réseau de données et le premier équipement terminal (2) comprend des moyens pour connecter l'équipement terminal au réseau de données.

8. Procédure selon l'une quelconque des revendications 1 à 7, **caractérisée en ce que** le second réseau de télécommunications (3) est un réseau téléphonique et/ou un réseau de télécommunications mobiles et le second équipement terminal (4) est compatible avec le réseau de télécommunications et/ou le réseau de télécommunications mobiles.
